# EUROPÄISCHE PATENTSCHRIFT

(11) **EP 0 548 598 B1**
(45) Veröffentlichungstag und Bekanntmachung des Hinweises auf die Patenterteilung: **12.06.1996**
(21) Anmeldenummer: 92120452.5
(22) Anmeldetag: 01.12.1992
(51) Int. Cl.: B23D 49/00, B23D 59/00, B23D 51/02

(54) **Kraftgetriebene Säge mit gegensinnig hin- und herbewegbaren Sägeblättern**
Motorized saw having two saw blades sliding in opposite directions to each other
Scie motorisée avec deux lames de scie oscillantes en sens inverse

(30) Priorität: 07.12.1991 DE 4140395
(43) Veröffentlichungstag der Anmeldung: 30.06.1993
(73) Patentinhaber: ROBERT BOSCH GMBH, 70442 Stuttgart (DE)
(72) Erfinder: Wünsch, Steffen, Dipl.-Ing., W-7038 Holzgerlingen (DE); Kemmner, Claus, Dipl.-Ing., W-7447 Aichtal-Neuenhaus (DE); Braunbach, Karl-Heinz, Dipl.-Ing., W-7022 Leinfelden-Echterdingen (DE); Härle, Vinzenz, Dipl.-Ing. (FH), W-7449 Neckartenzlingen (DE)

(56) Entgegenhaltungen:
- EP-A- 0 267 311
- GB-A- 2 218 376
- US-A- 2 840 125
- US-A- 2 895 514
- US-A- 3 064 698

## Beschreibung

### Stand der Technik

Die Erfindung geht aus von einer kraftgetriebenen Säge nach der Gattung des Anspruchs 1.

Durch die EP-A1 267311 ist eine kraftgetriebene Säge bekannt, deren Kontur der einer traditionellen Fuchsschwanz-Handsäge mit trapezförmigem Sägeblatt gleicht. Das Fuchsschwanz-Sägeblatt ist bei der kraftgetriebenen Säge allerdings mehrfach geteilt. Eine trapezförmige, als Schwert bezeichnete Stützplatte führt in ihrem unteren, nutartigen Bereich die Rücken der zwei hin- und hergehenden Sägeblätter. Das Schwert besteht hier aus zwei flächig aufeinander befestigten, trapezförmigen Blechplatten, die voneinander weggerichtet seitlich so abgekröpft sind, daß sich eine u-förmige Nut bildet. In dieser Nut sind die beiden Sägeblätter, gegen Herausfallen gesichert und eng nebeneinander geführt.

Ein sich beim Gebrauch zeigender Nachteil der bekannten Säge ist die verhältnismäßig hohe Reibung zwischen den Sägeblättern und der Führung im Schwert sowie eine verhältnismäßig schlechte Spanabfuhr aus dem Bereich der Schnittfuge eines in Bearbeitung befindlichen Werkstücks. Dies begünstigt einen Stau der angesammelten Späne im Bereich der Führungen der Sägeblätter und des Schwertes. Dies führt insbesondere zu starker Erwärmung bzw. Überhitzung des Schwertes und der Sägeblätter und ist Ursache für einen verhältnismäßig geringen Wirkungsgrad der Säge.

Außerdem ist die Herstellung des bekannten Schwertes verhältnismäßig aufwendig, weil dafür in ungünstiger Folge unterschiedliche Umformungs- und Verbindungstechniken erforderlich sind.

### Vorteile der Erfindung

Die erfindungsgemäße, kraftgetriebene Säge mit den kennzeichnenden Merkmalen des Anspruchs 1 hat demgegenüber den Vorteil, verringerter Reibung, verringerter thermischer Belastung, besserer Spanabfuhr und erhöhtem Wirkungsgrad. Außerdem ist das Schwert besonders einfach, nur mit Umformtechniken herstellbar, wobei verringertes Gewicht, verminderte Geräuschbildung und besonders hohe mechanische Festigkeit von Vorteil sind.

Weitere, vorteilhafte Ausgestaltungen der Erfindung ergeben sich aus den abhängigen Ansprüchen.

### Zeichnung

Ausführungsbeispiele der Erfindung sind in der nachfolgenden Beschreibung anhand der zugehörigen Zeichnung näher erläutert.

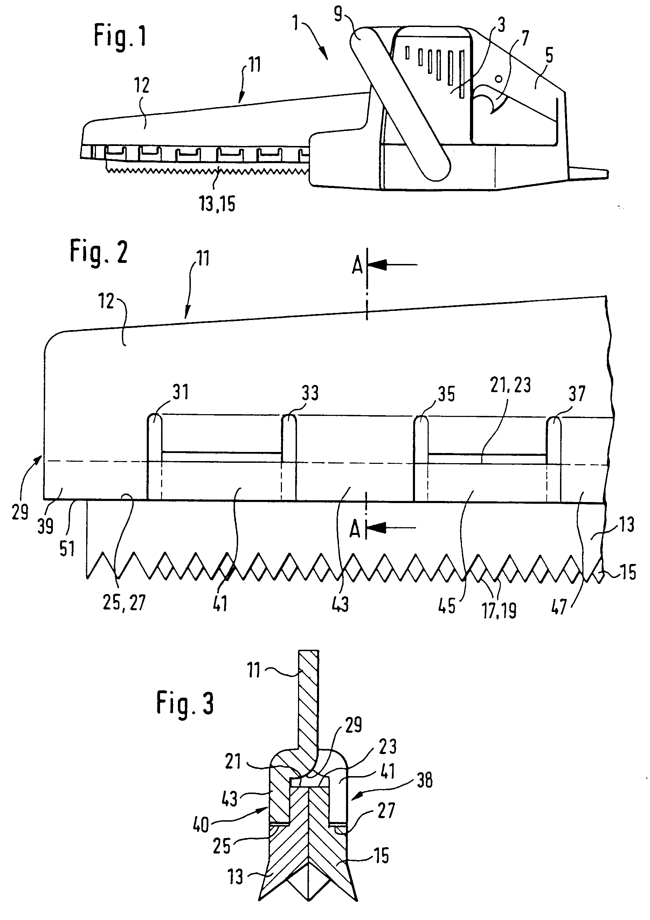

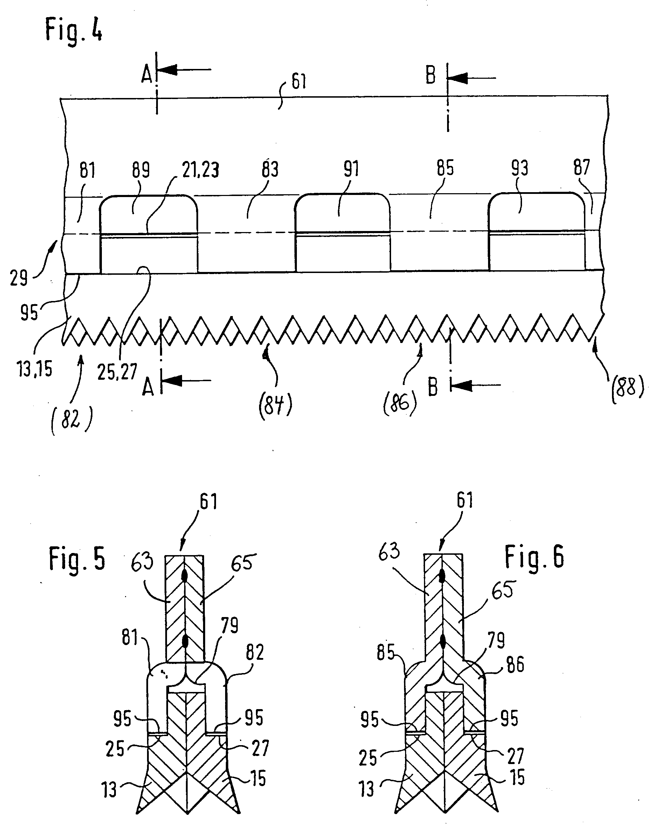

Es Zeigen Figur 1 die Seitenansicht des Ausführungsbeispiels einer erfindungsgemäßen Säge, Figur 2 eine Seitenansicht des Schwerts und der Sägeblätter gemäß Figur 1, Figur 3 eine Schnittdarstellung der Figur 2, Figur 4 ein weiteres Ausführungsbeispiel des Schwerts und der Sägeblätter einer erfindungsgemäßen Säge und die Figuren 5 und 6 Schnittdarstellungen der Figur 4.

### Beschreibung des Ausführungsbeispiels

Die in Figur 1 in einer Seitenansicht gezeigte Säge 1 besteht aus einem Maschinengehäuse 3 mit einem Bedienhandgriff 5, mit Ein- und Ausschalter 7, einem Zusatzhandgriff 9 und einem mit dem Maschinengehäuse 3 verbundenen Schwert 11, in dem hin- und herbewegbar zwei Sägeblätter 13 und 15 geführt sind.

Durch Ingangsetzen des nicht dargestellten Motors nach Betätigen des Ein- und Ausschalters 7 werden die Sägeblätter 13, 15 gegenläufig, in engem Abstand zueinander hin und her bewegt. Gesägt wird, indem die Säge normal zum Verlauf ihrer Sägeblätter 13, 15 auf ein Werkstück gepreßt wird. Der Sägevorschub ist dabei - in gewissen Grenzen - von der Kraft des Bedienenden normal zum Verlauf der Sägeblätter 13, 15 abhängig.

Die in Figur 2 gezeigte vergrößerte Seitenansicht des vorderen Teiles des Schwertes 11 mit den Sägeblättern 13, 15 zeigt je einen Sägezähne 17, 19 tragenden Bereich, je einen auf der entgegengesetzten Seite der Sägezähne 17, 19 befindlichen Rücken 21, 23 und je eine seitliche Schulter 25, 27.

Mit ihren Rücken 21, 23 sind die Sägeblätter 13, 15 in einem nutartigen Profil 29 des Schwertes 11 geführt.

Das Profil 29 wird durch Stanzbiegebearbeitung des Schwertes 11 auf folgende Weise hergestellt: Im unteren Bereich des Schwertes 11 ist normal zur Schwertachse in einheitlicher Höhe zueinander eine Reihe schlitzförmiger Ausnehmungen 31, 33, 35, 37 gleicher Abmessungen eingebracht, durch die der untere Bereich des Schwertes 11 sägezahnartig in eine Reihe rechteckiger Lappen 39, 41, 43, 45, 47 unterteilt wird. Die Lappen 39, 41, 43, 45, 47 sind abwechselnd nach je einander gegenüberliegenden Seiten im gleichen Abstand zur Schwertmittelebene abgekröpft. Dadurch werden die Seitenwände 38, 40 in Längsrichtung des Schwertes 11 betrachtet, jeweils abwechselnd seitlich durchbrochen. Die Maße eines jeweils offenen, seitlichen Bereichs der Seitenwände 38, 40 entsprechen jeweils der Breite eines der Lappen 39 bis 47 zuzüglich der Breite zweier der Ausnehmungen 31 bis 37. Mit je einer durch die seitlich offenen Bereiche unterbrochenen Unterkante 51 stützt sich das Schwert 11 auf die Schultern 25, 27 der Sägeblätter 13, 15.

Die in Figur 3 gezeigte Schnittdarstellung des Schwertes 11 im Bereich des Lappens 43 verdeutlicht die Gestaltung des Schwertes 11 durch in Längsrichtung nach wechselnden Seiten abgekröpfte Lappen 41, 43 und deren in Längsrichtung des Schwertes 11 gebildetes, nutartiges Profil 29. Aus Figur 3 wird auch deutlich, daß durch die abwechselnd gekröpften Lappen 41, 43 jeweils fensterartige, offene Seitenwandbereiche im nutartigen Profil 29 entstehen.

In Figur 4 ist ein weiteres Ausführungsbeispiel eines Schwertes 61 gezeigt, das zur Verwendung für eine Säge gemäß Figur 1 geeignet ist. Das Schwert 61 wird durch zwei blechartige Platten 63, 65 gebildet, die flächig aufeinander geklebt oder geschweißt sind. Das Schwert 61 hat eine regelmäßige, rechteckige Gestalt und hat ebenso wie das Ausführungsbeispiel gemäß Figur 2 ein nutartiges Profil 79, das von der Seite gesehen, eine sägezahnartige Gestalt hat, wobei nebeneinander 2 Reihen rechteckiger Lappen 81, (82), 83, (84), 85, (86), 87, (88) gleicher Abmaße, beabstandet durch Ausnehmungen 89, 91, 93 in einer Reihe aufeinanderfolgend angeordnet sind. Die hinter den Lappen 81, 83, 85, 87 und durch diese verdeckt angeordneten Lappen (82), (84), (86), (88) sind in Klammern gesetzt.

Im Schwert 61 sind die Sägeblätter 13, 15 - identisch mit denen gemäß der Figuren 1 und 2 - unverlierbar gelagert. Mit ihren Rücken 21, 23 sind die Sägeblätter 13, 15 im nutartigen Breich 79 durch nichtdargestellte Mittel gegen Herausfallen gesichert, eng nebeneinander geführt. Auf den Schultern 25, 27 der Sägeblätter 13, 15 stutzt sich eine Unterkante 93 des Schwertes 61, unterbrochen durch die Ausnehmungen 89 bis 91, ab.

In den Figuren 5 und 6 sind jeweils Schnittdarstellungen durch den Lappen 85 bzw. durch die Ausnehmung 89 gezeigt. Dadurch wird die paarweise Anordnung der Platten 63, 65 zur Bildung des Schwertes 61 deutlich, sowie die paarweise einander gegenüberliegend angeordneten Ausnehmungen 89 bis 93 und die einander gegenüberliegend paarweise angeordneten Lappen 81 bis 88. Auch hier ist die nutartige Ausgestaltung des unteren Abschnitts des Schwert 61 mit den Ausnehmungen 89 bis 93 besonders günstig für den Spanabtransport bei geringer Reibung und guter Kühlung .

Bei einem weiteren nicht dargestellten Ausführungsbeispiel kann das Schwert wie zu dem vorhergehenden Ausführungsbeispiel beschrieben ausgestaltet sein, jedoch so, daß abwechselnd jeder zweite Lappen ausgespart bleibt. Auf diese Weise werden bei einer weiteren Gewichtserparnis des Schwertes günstige Spanabtransportöffnungen geschaffen.

## Patentansprüche

1. Kraftgetriebene Säge (1) mit Schwert (11), das zwei parallel zueinander, gegensinnig hin- und herbewegbar angeordnete Sägeblätter (13, 15) trägt, die an einer Längsseite Sägezähne (17, 19) aufweisen und die mit ihren den Sägezähnen (17, 19) abgewandten Rücken (21, 23) in einer nutartigen Führung (29) mit Seitenwänden (38, 40) im unteren Bereich des plattenförmigen Schwerts (11) in engem Abstand zueinander angeordnet sind, dadurch gekennzeichnet, daß die nutartige Führung (29) durch mehrere, in Längsrichtung aufeinanderfolgende Ausnehmungen (31, 33, 35, 37) unterbrochen ist und sich so aus mehreren zueinander fluchtenden, nutartigen Führungen zusammensetzt, wobei die nutartige Führung (29), insbesondere durch Stanzen und Biegen, aus einer Platte (12) ausgeformt ist.

2. Säge nach Anspruch 1, dadurch gekennzeichnet, daß das Schwert (11) aus einer einzigen Platte (12), insbesondere aus Blech besteht, deren unterer Bereich die nutartige Führung (29) bildet.

3. Säge nach den Ansprüchen 1 oder 2, dadurch gekennzeichnet, daß die Seitenwände (38, 40) der nutartigen Führung (29) aus, insbesondere in einer Reihe aufeinanderfolgenden, rechteckigen Lappen (39, 41, 43, 45, 47) gebildet werden, wobei die Breite jeder der Ausnehmungen (31, 33, 35, 37) jeweils mindestens der Breite eines Lappens (39, 41, 43, 45, 47) entspricht.

4. Säge nach einem der vorhergehenden Ansprüche, dadurch gekennzeichnet, daß die Lappen (39, 41, 43, 45, 47) abwechselnd, nach der einen und der anderen Seite, insbesondere rechtwinklig, abgekröpft sind.

5. Säge nach einem der vorhergehenden Ansprüche, dadurch gekennzeichnet, daß das Schwert (11) aus zwei Platten (63, 65) gefügt ist, wobei die Lappen (81, 83, 85, 87) der jeweils einen Platte (63, 65) mit ihren abgekröpften Bereichen die Ausnehmungen (89, 91, 93) der jeweils anderen Platte (63, 65) reißverschlußartig durchgreifen und so die nutartige Führung (29) bilden.

6. Säge nach einem der Ansprüche 1 und 3 bis 5, dadurch gekennzeichnet, daß das Schwert (11) aus zwei Platten (63, 65) gefügt ist, wobei die abgekröpften Bereiche jeder Reihe der Lappen (81, 82, 83, 84, 85, 86, 87) voneinander wegweisen, wobei die Lappen (81, 83, 85, 87) in jeder Reihe jeweils im Abstand der doppelten, insbesondere der dreifachen Lappenbreite zueinander angeordnet sind und wobei die Lappen (81, 83, 85, 87) der einen Platte (63) den Lappen der anderen Platte (65) in einem der Breite der nutartigen Führung (29) entsprechenden Abstand gerade oder versetzt gegenüber angeordnet sind.

7. Säge nach einem der vorhergehenden Ansprüche, dadurch gekennzeichnet, daß das Schwert (11) entsprechend der Kontur einer an sich bekannten Fuchsschwanz-Handsäge trapezförmig ausgestaltet ist.

## Claims

1. Power-driven saw (1) having an arm (11) carrying two saw blades (13, 15) which are arranged for reciprocating movement in opposite directions parallel to one another and have saw teeth (17, 19) on one longitudinal side and which are arranged with their backs (21, 23), on the side remote from the saw teeth (17, 19), spaced close to one another in a slot-like guide (29), which has side walls (38, 40), in the bottom region of the platform-like arm (11), characterised in that the slot-like guide (29) is interrupted by a plurality of recesses (31, 33, 35, 37) succeeding one another in the longitudinal direction and is thus composed of a plurality of slot-like guides in alignment with one another, said slot-like guide (29) being fashioned from a plate (12), particularly by stamping and bending.

2. Saw according to Claim 1, characterised in that the arm (11) consists of a single plate (12), particularly of sheet metal, the bottom region of which forms the slot-like guide (29).

3. Saw according to Claims 1 or 2, characterised in that the side walls (38, 40) of the slot-like guide (29) are formed by rectangular tabs (39, 41, 43, 45, 47), particularly tabs succeeding one another in a row, the width of each of the recesses (31, 33, 35, 37) corresponding in each case to at least the width of a tab (39, 41, 43, 45, 47).

4. Saw according to one of the preceding claims, characterised in that the tabs (39, 41, 43, 45, 47) are offset, particularly at right angles, towards alternate sides.

5. Saw according to one of the preceding claims, characterised in that the arm (11) is assembled from two plates (63, 65), the tabs (81, 83, 85, 87) of the one plate (63, 65) interlocking in each case by their offset regions, after the style of a sliding-clasp fastener, with the recesses (89, 91, 93) of the respective other plate (63, 65), and thus forming the slot-like guide (29).

6. Saw according to one of Claims 1 and 3 to 5, characterised in that the arm (11) is assembled from two plates (63, 65), wherein the offset regions of each row of tabs (81, 82, 83, 84, 85, 86, 87) point away from one another and the tabs (81, 83, 85, 87) in each row are in each case spaced apart at distances equal to twice or in particular three times the width of the tabs, while the tabs (81, 83, 85, 87) of the one plate (63) are arranged opposite or offset relative to the tabs of the other plate (65) with a spacing corresponding to the width of the slot-like guide (29).

7. Saw according to one of the preceding claims, characterised in that the arm (11) has a trapezoidal shape corresponding to the contour of a hand padsaw known per se.

## Revendications

1. Scie à moteur (1) comprenant un sabre (11) portant deux lames de scie (13, 15) parallèles, effectuant un mouvement alternatif l'une par rapport à l'autre, ces lames de scie étant munies sur leurs côtés longitudinaux, de dents de scie (17, 19) et leur dos (21, 23) opposé aux dents de scie (17, 19), étant logé étroitement dans un guide (29) en forme de rainure avec les parois latérales (38, 40) dans la zone inférieure du sabre (11) en forme de plaque, caractérisée en ce que le guide (29) en forme de rainure est interrompu par plusieurs découpes (31, 33, 35, 37) qui se suivent dans la direction longitudinale et se composent ainsi de plusieurs guides en forme de rainure, alignés, le guide (29) en forme de rainure étant réalisé notamment par matriçage et pliage d'une plaque (12).

2. Scie selon la revendication 1, caractérisée en ce que le sabre (11) est formé d'une seule plaque (12) notamment en tôle dont la zone inférieure forme le guide en forme de rainure (29).

3. Scie selon les revendications 1 ou 2, caractérisée en ce que les parois latérales (38, 40) du guide en forme de rainure (29) sont réalisées par des pattes rectangulaires (39, 41, 43, 45, 47) qui se suivent notamment dans un ordre, à largeur de chaque découpe (31, 33, 35, 37) correspondant respectivement au moins à la largeur d'une patte (39, 41, 43, 45, 47).

4. Scie selon l'une des revendications précédentes, caractérisée en ce que les pattes (39, 41, 43, 45, 47) sont repliées alternativement vers l'un ou l'autre côté en particulier à l'équerre.

5. Scie selon l'une des revendications précédentes, caractérisée en ce que le sabre (11) est composé de deux plaques (63, 65), les pattes (81, 83, 85, 87) de chaque fois une plaque (63, 65) traversent par leurs zones repliées, des découpes (89, 91, 93) de chaque autres plaques (63, 65) à la manière d'une fermeture imbriquée, et constituant ainsi le guide en forme de rainure (29).

6. Scie selon l'une des revendications 1 et 3 à 5, caractérisée en ce que le sabre (11) est formé par la réunion de deux plaques (63, 65), les zones repliées de chaque rangée de pattes (81, 82, 83, 84, 85, 86, 87) s'écartant, les pattes (81, 83, 85, 87) de chaque rangée étant chaque fois prévues à distance du double et notamment du triple de largeur d'une patte et les pattes (81, 83, 85, 87) d'une plaque (63) étant prévues par rapport aux pattes de l'autre plaque (65) à une distance correspondant à la largeur du guide (29) en forme de rainure, étant opposée ou décalée.

7. Scie selon l'une des revendications précédentes, caractérisée en ce que le sabre (11) est mis en forme suivant le contour trapézoïdal d'une scie égoïne connue en soi.
